(19) Europäisches Patentamt

European Patent Office

Office européen des brevets

(11) EP 1 380 918 A2

(12) EUROPEAN PATENT APPLICATION

(43) Date of publication:
14.01.2004 Bulletin 2004/03

(51) Int Cl.⁷: G06F 1/12

(21) Application number: 03254411.6

(22) Date of filing: 11.07.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 12.07.2002 US 395651 P

(71) Applicant: Ensequence, Inc.
Portland, OR 97204 (US)

(72) Inventors:
• Marshall, Robert Alexander
  Portland, OR 97229 (US)
• Chu, Heston Hsin Sheng
  Portland, OR 97214 (US)

(74) Representative: Roberts, Mark Peter
J.A. Kemp & Co.,
14 South Square,
Gray's Inn
London WC1R 5JJ (GB)

(54) **Method and system for synchronizing operation of remote timer with central control unit**

(57)     A method, computer readable medium, and system are provided for synchronizing a slave clock time with reference time signals received from a master clock. A first basis set of reference time signals received from a master clock is collected. A first comparison set of slave time signals from a slave clock is identified such that each of the slave time signals in the first comparison set correspond with receipt of each of reference time signals in the first basis set. A difference between each of the reference time signals in the first basis set and the slave time signals in the first comparison set is calculated. An average difference between each of the reference time signals in the first basis set and the slave time signals in the first comparison set is then calculated and a slave time kept by the slave clock is adjusted by the average difference.

Fig. 5

## Description

This invention relates generally to the keeping of time in a computer system and, more particularly, to synchronization of a clock at a remote site with a master clock.

The improved price-performance of digital technology has made possible the advent of digital media broadcasting. The reduced cost of microprocessors, digital memory, and related devices has made it possible to place computers in set-top boxes (STBs) and related devices to receive digital cable or digital satellite television signals and decode those signals into audio-visual programs.

The advent of digital television broadcasting and the proliferation of STBs also makes it possible to enhance viewers' television experiences. In addition to transmitting video and audio data, digital media broadcasting allows additional data to be transmitted to the STBs with which users can interact. By analogy, users can interact through an STB with data transmitted via the digital media broadcast the way a computer user can interact with data available over the Internet. For example, digital television subscribers are already acquainted with an electronic program guide (EPG) function which enables users to select and tune to particular programs and/or read about the programs being shown at present or at later points in time.

The EPG is a rudimentary example of an interactive television application exploiting the capability of the digital broadcast medium to transmit additional content and for the STB to execute this additional content. The computer functionality of STBs also makes other interactive television applications possible. With appropriately configured STBs, users potentially can play along with game shows, take tests in on-line distance learning courses, bid in on-line auctions, and otherwise actively engage the content being broadcast. STBs thus allow users to have highly interactive television experiences.

One type of additional content application which is desirable in such a broadcast environment is one which provides functionality synchronized with video or audio content on a broadcast channel. In the examples of interactive game shows, on-line distance learning testing, and on-line auctions, it would be highly desirable to provide application-specific behaviors in an STB which are correlated to associated video and audio streams being broadcast. However, providing application-specific behaviors appropriately coordinated with video and audio streams presents a number of concerns.

An important concern is in synchronizing and maintaining the synchronization of a clock used to drive an interactive application to ensure that the application performs as desired by the creators and broadcasters of the application. In the examples listed above, manifest problems can result if a local clock driving an interactive application is out of synchronization with a master clock at a broadcast site. Users playing along with game shows might not be given the time to answer questions indicated by a host displayed on the screen. Students taking on-line tests might be given time to answer a question after the correct answer already had been displayed. Bidders in on-line auctions could win against higher bidders or lose against lower bidders because of timing inequalities among the bidders' systems. Clearly, maintaining synchronization of the local clocks regulating users' interaction with the interactive applications is an important concern.

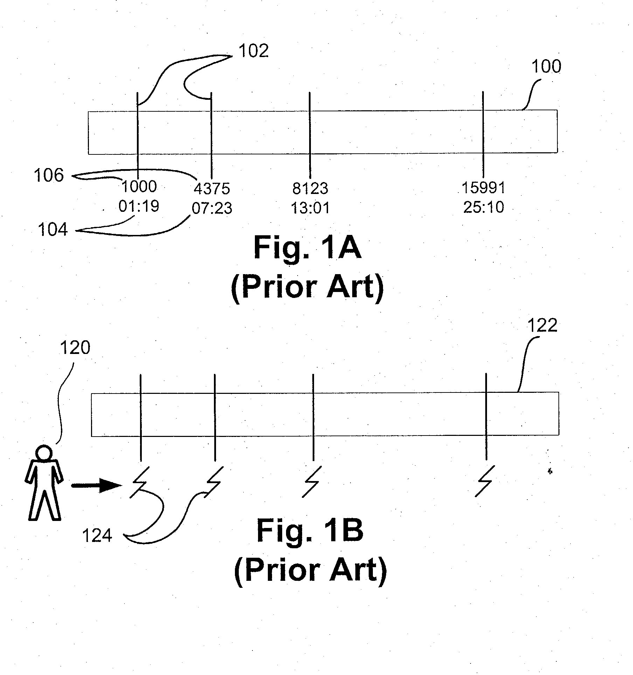

Conventionally, timing of users' local clocks is regulated using a number of methods. A first method embeds synchronization points within the application data content to asynchronously initiate the additional content. For example, Society for Motion Picture and Television Engineers (SMPTE) time codes or frame numbers, counted from a selected reference point, can be used to trigger additional content as shown in FIGURE 1A. An application or program 100 is embedded with a number of trigger points 102. An application (not shown) executing the program 100 then monitors the video time codes 104 or frame numbers 106 and, using conventional conditional logic, determines when a trigger point 102 has been reached. The application (not shown) can then execute specific program logic to generate the change in appearance or behavior associated with the trigger points 102. This method is self-contained in that the encoded synchronization points can initiate display of the additional content. However, this method does suffer a disadvantage in that it consumes a significant amount of programming logic and a corresponding amount of program memory within the STB to operate. It also will be appreciated that, if there is a miscommunication in transmission of the reference point, none of the synchronization points will execute at the appropriate time.

A second method shown in FIGURE 1B involves a control operator 120 transmitting control signals at a broadcast site from which a program 122 is being transmitted can transmit control signals 124 to initiate the additional content. The control operator 120 might engage a semi-automatic computer application (not shown) to monitor the program 122 and view previously conceived timelines. Using such a system, the control operator 120 in real time could actuate a control device to insert trigger signals 124 into the broadcast stream at the appropriate times. The application executing the program 122 receives these trigger signals 124, interprets the instructions encoded therewith, and then effects the desired change in behavior or appearance of the program related to the additional content. The code needed to initiate the additional content may have been previously stored in the program memory, or may be transmitted along with the trigger signals 124. This method is used in the Advanced Television Enhancement Forum ("ATVEF") standard for interactive television over analog channels.

This second approach has the potential advantage of using less computer memory resources than does the first method. Nonetheless, this approach presents its own concerns. First, sending trigger signals 124 requires human intervention during the broadcast. Further, real-time bandwidth capable of supporting this remote control of the content is required. Second, in a digital media broadcast environment, even if the trigger signals 124 are sent at the appropriate times, limitations of the digital broadcasting medium may make it impossible to control when the trigger signals 124 will be received. In digital broadcasting, data blocks of video data, audio data, and other data, such as these trigger signals 124, all must be multiplexed for transmission. Unlike in an analog environment where signals can be added to a broadcast feed at a desired time, multiplexing of the digital signals can result in signals such as the trigger signals 124 being transmitted at different times. This results in a potentially ever-shifting offset between the transmission of the trigger signals 124 and their receipt. In other words, the process of multiplexing the trigger signals into the digital broadcast stream results in signal jitter which, in turn, results in clock phase jitter at sites receiving the timing signals.

To help reduce phase jitter, STBs can be equipped with their own slave clocks to be synchronized to a master clock at a broadcast site. However, placing slave clocks in the STBs may not solve the problems previously described. To keep manufacturing costs low, slave clocks may incorporate inexpensive parts. As a result, the slave clocks might exhibit significant clock drift on the order of one part in a thousand. Consequently, an application running on an STB with such a clock could be off by nearly two seconds by the end of a half-hour program, and that is assuming the slave clock was perfectly synchronized at the outset of the program. A potential solution to redress timing drift in the slave clocks is to periodically synchronize the slave clocks to the master clock. This solution, however, presents additional concerns.

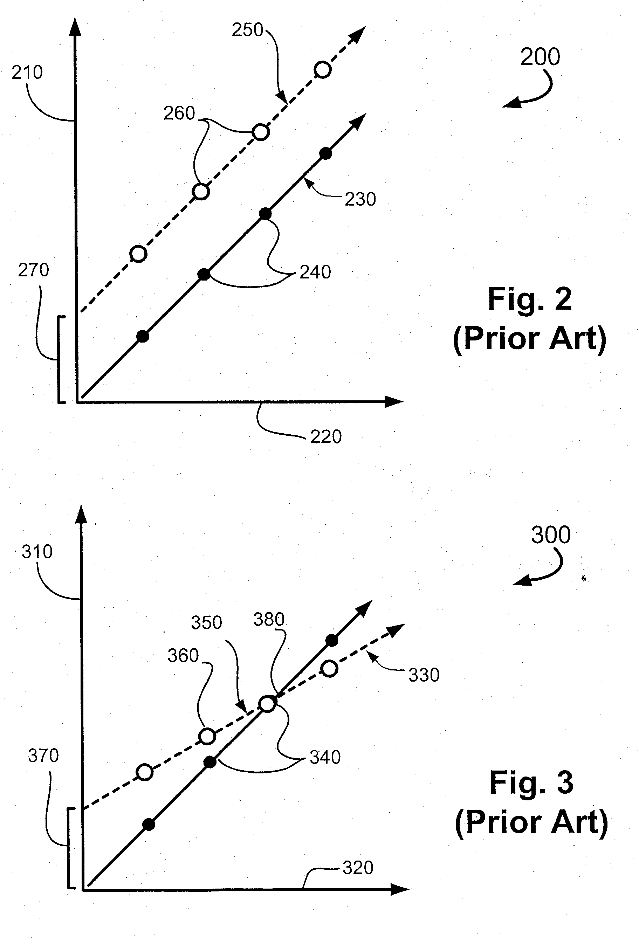

FIGURE 2 shows a graph 200 plotting timing of local timing signals 210 versus timing of master clock signals 220 in an ideal system. In the ideal system, the slave clock is synchronized with the master clock and the slave clock rate accurately tracks the master clock rate. A master clock generates a regular sequence 230 of master clock signals 240. At a receiver equipped with a slave clock, a sequence 250 of slave clock signals 260 is generated. As can be seen from the graph, the slope of the lines representing the sequences 230 and 250 shows that the clocks track at the same rates. A difference between them is an offset 270 representing a propagation delay resulting from a time it takes for a synchronization signal from the master broadcast site to be received and processed. This offset 270 typically is negligible because it is small, is consistent across the network, and corresponds with a similar offset in broadcast of other video and audio content. In other words, in the ideal system shown in the graph 200, the slave clock signals 260 track the master clock signals 240 save for an acceptable propagation delay offset 270.

However, in a practical environment, such an ideal system as that described in the graph 200 of FIGURE 2 does not exist. FIGURE 3 shows a graph 300 of one possible scenario in which a slave clock does not accurately track a master clock. Again, the graph 300 plots timing of local timing signals 310 versus timing of master clock signals 320. In this system, the slave clock signals 360 are initially synchronized to the master clock signals 240. However, with the progression of time, a sequence of the slave clock signals 350 proceeds differently than that of the sequence of master clock signals 330. In particular, the slave clock in this example runs faster than the slave clock. Accordingly, any difference caused by a propagation delay offset 370 subsequently closes over time as the slave clock time sequence 350 overtakes the master clock time sequence 330 as shown by an intersection 380 of the sequences. Thus, presuming a propagation delay continues with the accompanying video and audio content, the timing of the program on the receiving device driven by the slave clock signals 360 will be out of synchronization with the program. The time signals triggering events will come earlier and earlier until the application may become unworkable.

One solution to a timing creep problem as shown in FIGURE 3 is to regularly resynchronize the slave clock with the master clock. Although the slave clock rate may not accurately track the master clock rate, regular resynchronization of the clocks can reduce the discrepancy to a manageable level. Unfortunately, in a digital broadcast environment where timing signals have to be multiplexed, resulting jitter can undermine the synchronization process.

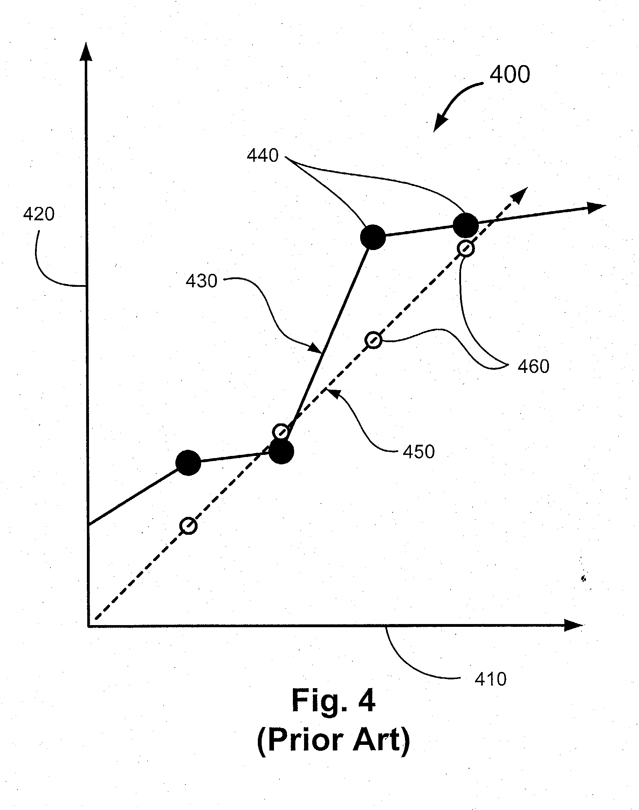

FIGURE 4 shows a graph 400 illustrating the synchronization problems caused by jitter in the master clock signals caused by multiplexing or other effects. The graph 400 plots an absolute time 410 on the horizontal axis and a time generated/received 420 on the vertical axis. The sequence 450 of slave clock signals 460 runs at a consistent rate. Unfortunately, as described in connection with FIGURE 3, this rate may be wrong. However, attempting to synchronize the sequence 450 of slave clock signals 460 with the gerrymandering sequence 430 of master clock signals 440 would present problems of its own. Jitter in the master clock signals 440 results in a jagged sequence 430 of the master clock signals 440. Resynchronizing the slave clock signals 460 over a long term might result in an average whereby the slave clock rate more accurately tracks the master clock rate. However, synchronizing at times shown would result in ongoing jitter in the slave clock signals 460. Such jitter could result in abrupt changing of program attributes. Moreover, if a program event is keyed to be triggered only if computer program execution had commenced before a particular time is reached, a forward adjustment of the slave clock time signals 460 could result in that program event being ignored. Such triggering of program events is described in a co-pending patent application entitled "METHOD AND SYSTEM FOR FLEXIBLE TIME-BASED CONTROL OF APPLICATION APPEARANCE AND BEHAVIOR," bearing attorney docket number N.89070.

Undesirable effects of jitter also can be considered mathematically. At a time $T$ the master clock emits a reference signal $M_0$. After a delay resulting from propagation delay and jitter, the signal is received by the slave clock as $M'_0$. The delay can be considered as having two components, a mean delay $P$ and the deviation from the mean resulting from jitter $J_0$. Therefore, the master clock signal received by the slave clock can be written as:

$$M'_0 = M_0 + P + J_0$$

The slave clock time when the signal is received is $S_0$. Thus, the apparent error $E_0$ between the slave clock time and the master clock time can be written as:

$$E_0 = S_0 - M_0$$

However, considering the error components in the received master clock signal $M'_0$, the actual error $E'_0$ inherent as a result of the error components in the received master clock signal $M'_0$ can be derived to be:

$$E'_0 = S_0 - M'_0 = S_0 - M_0 - P - J_0$$

$$E'_0 = E_0 - P - J_0$$

Correcting the slave clock to account for this error, as visually can be appreciated from FIGURE 4, incorporates jitter into the slave clock signal $S_0$. Mathematically, adjusting the slave clock signal $S_0$ as result of the apparent error $E'_0$ directly incorporates the jitter $J_0$ into the adjusted slave clock signal $A_0$:

$$A_0 = S_0 - E_0$$

Put another way, substituting in the equations shows this adjustment to the slave clock incorporates into the adjusted slave clock signal $A_0$ a degree or error between the perceived error $E'_0$ and the actual error $E_0$:

$$E'_0 - E_0 = -P - J_0.$$

In other words, the slave clock will be behind (slow) by the amount of the propagation delay, as expected, but also behind or ahead by the amount of the jitter $J_0$.

As previously described, jitter continues and varies with time, resulting in potentially runaway error. If the slave clock signal $S_0$ is set at the receipt of the first synchronization at a time $T$, at time $T + \delta$ the master clock emits a reference signal with time signature $M_1 = M_0 + \delta$ resulting in perceived signal $M'_1$:

$$M'_1 = M_0 + \delta + P + J_1,$$

The elapsed time at the slave clock $D_{0 \Rightarrow 1}$ between the first perceived master clock signal $M'_0$ and the second perceived master clock signal $M'_1$ incorporates jitter affecting both perceived signals

$$D_{0 \Rightarrow 1} = M'_1 - M'_0 = \delta + J_1 - J_0,$$

The error in the unadjusted slave clock time $E_1$ incorporates the elapsed time :

$$E_1 = (S_0 + D_{0 \Rightarrow 1}) - M_1.$$

Substituting shows the effects of the ongoing jitter:

$$E_1 = (S_0 + \delta + J_1 - J_0) - (M_0 + \delta)$$

$$E_1 = E_0 + J_1 - J_0.$$

Thus, if the slave clock is set according to the error determined from the first reference signal, the measured differential error at the second reference signal $E_1 - E_0$ will be the sum of the jitters of the first and second signal $J_1 - J_0$. Therefore, while the mean differential error between any two reference signals will be zero (the expected value of $(J_{i+1} - J_i)$), the variance of the differential error (the expected value of $(J_{i+1} - J_i)^2$) is increased by a factor of two.

Thus, there is an unmet need in the art for methods and systems for maintaining time on a slave clock accurately tracking a master clock time where reference signals received by the remote clock are subject to propagation delays and jitter.

Embodiments of the present invention facilitate synchronizing a slave clock with a master clock to avoid the effects of jitter in transmitted master clock signals. Effects of jitter are reduced by collecting a set of master clock time signals and averaging an error between the slave clock time signals and the master clock time signals. Repeating this process allows for correcting the slave clock time signals to correspond with the master clock signals over time without introducing abrupt timing shifts caused by jitter.

More specifically, embodiments of the present invention provide a method, a computer readable medium, and a system for synchronizing a slave clock time with reference time signals received from a master clock. Using embodiments of the present invention, a first basis set of reference time signals received from a master clock is collected. A first comparison set of slave time signals from a slave clock is identified such that each of the slave clock time signals in the first comparison set corresponds with receipt of each of the reference time signals in the first basis set. A difference between each of the reference time signals in the first basis set and the slave time signals in the first comparison set is calculated. An average difference between each of the reference time signals in the first basis set and the slave time signals in the first comparison set is then calculated and a slave time kept by the slave clock is adjusted by the average difference. Embodiments of the invention can be configured to respond to a stop indicator signaling that the slave clock time should be stopped. Upon the stop indicator being rescinded, the slave clock is synchronized to a master clock reference signal and then resynchronized over time as previously described.

In accordance with further aspects of the invention, the synchronization process repeats using subsequently collected second basis and second comparison sets of time signals. The slave time can be adjusted incrementally, such as by portions of the average difference. Also, over time cumulative average differences can be calculated to facilitate slave time adjustment. Intervals between synchronizations can be selected to reduce overhead of continual or constant synchronization. Embodiments of the invention allow for a slave clock to be associated with a local device and a master clock associated with a remote device, allowing synchronization of local devices across a network. The local device can receive reference signals from a wired or wireless network which can be a media broadcast network.

The preferred and alternative embodiments of the present invention are described in detail below, by way of example only, with reference to the following drawings, in which:-

FIGURE 1A is a timeline of timing reference signals for a hypothetical prior art interactive software application using embedded timing reference signals;

FIGURE 1B is another timeline of timing reference signals for a hypothetical prior art interactive software application using asynchronously broadcast timing reference signals;

FIGURE 2 shows a graph plotting master clock generated timing reference signals and slave clock generated timing reference signals in a hypothetical conventional system where the slave clock rate accurately tracks the master clock rate;

FIGURE 3 shows a graph plotting a master clock generated timing reference signals and slave clock generated timing reference signals in a hypothetical conventional system where the slave clock rate inaccurately tracks the master clock rate;

FIGURE 4 shows a graph plotting master clock generated timing reference signals affected by jitter as received at a remote location and slave clock generated timing reference signals in a hypothetical conventional system;

FIGURE 5 is a flowchart of a routine using an embodiment of the present invention for adjusting a slave time kept by slave clock;

FIGURE 6 is a flowchart of a routine using a second embodiment of the present invention for adjusting a slave time kept by a slave clock in an environment where the slave time can be stopped by a received signal; and

FIGURE 7 is a block diagram of a data processing/media control system for broadcasting master reference time signals and/or for receiving and responding to time reference signals according to an embodiment of the present invention.

By way of overview, embodiments of the present invention provide a method, a computer readable medium, and a system for synchronizing a slave clock time with reference time signals received from a master clock. Using embodiments of the present invention, a first basis set of reference time signals received from a master clock is collected. A first comparison set of slave time signals from a slave clock is identified such that each of the slave time signals in the first comparison set corresponds with receipt of each of reference time signals in the first basis set. A difference between each of the reference time signals in the first basis set and the slave time signals in the first comparison set is calculated. An average difference between each of the reference time signals in the first basis set and the slave time signals in the first comparison set is then calculated and a slave time kept by the slave clock is adjusted by the average difference. Embodiments of the invention can be configured to respond to a stop indicator signaling that the slave clock time should be stopped. Upon the stop indicator being rescinded, the slave clock is synchronized to a master clock reference signal, then resynchronized over time as previously described.

Embodiments of the present invention reduce variance of actual error between the master clock signals and the slave clock signals. Variances in a slave clock rate and a master clock rate can be adjusted by periodically synchronizing the slave clock to the master clock. Thus, to focus on the manner in which embodiments of the present invention reduce undesirable effects of jitter, it is assumed that the master clock and the slave clock track at the same clock rate.

As previously explained, where the master clock emits a reference signal $M_0$, the signal is received by the slave clock as $M'_0$, and a relative delay consists of a mean delay $P$ and the deviation from the mean resulting from jitter $J_0$, the master clock signal received by the slave clock can be written as:

$$M'_0 = M_0 + P + J_0$$

If the master and slave clock have the same rate, then the absolute offset between them $E'_i$ is constant, and so the expected value of

$$\langle E_i \rangle = \langle E'_i + P + J_i \rangle = E' + P$$

can be estimated by averaging $E_i$

$$E' + P \cong \overline{E}_i = \frac{1}{n} \sum_{i=1}^{n} E_i .$$

Averaging $n$ values reduces the variance of $E_i$ by $1/n$. It will be appreciated that the mean delay incorporates and thus accounts for the clock offset.

Also as previously described, the mean delay is caused by the time required to create, multiplex and broadcast the reference signal. Within a network, broadcast propagation time between a broadcast site and individual receiving locations will vary from one to another. However, considering transmission speeds, this variation is small relative to the mean delay. Practically, because the mean delay at any one receiving location is constant, and the variation of the mean delay across a network is small, the imprecision introduced by ignoring the mean delay suitably is neglected. Alternatively, however, if the mean delay can be measured or estimated, the mean delay can be compensated by appropriately adjusting the value of the reference time in the synchronization signal.

In one presently preferred embodiment, the synchronization signal is transmitted once every two seconds. The apparent offset is measured for four consecutive received sync signals, and the offsets averaged. The clock is then set according to the average offset value. One minute later, the process is repeated. Therefore, once started, synchronization takes no longer than ten seconds to occur, and is updated at least once every 70 seconds. If the master and slave clock do not have the same rate, $E'_i$ is a function of time, and the averaging process yields an time-averaged value for $E'$. However, for practical devices, the difference in rates is not sufficient to introduce a significant error when re-synchronization occurs each minute.

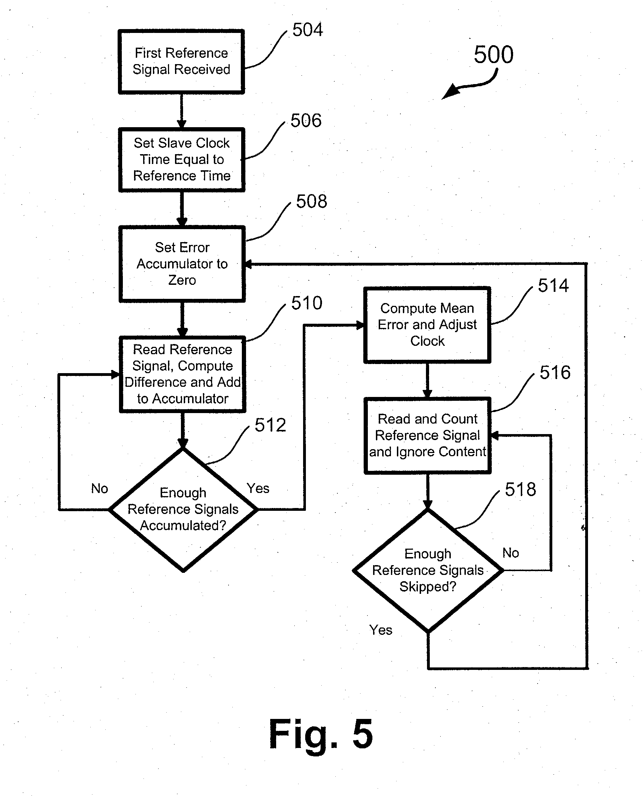

FIGURE 5 shows a flowchart of a routine 500 for synchronizing a slave clock according to an embodiment of the present invention. At a block 504 a first reference time signal from the master clock is received. At a block 506, the slave clock time is synchronized to the master clock time contained in the first reference signal. At a block 508, an error accumulator, which is used to accumulate total error between master clock reference time signals in the basis set and the slave clock time signals in comparison set, is set to zero. At a block 510, a master clock reference time signal is read and an error representing a difference between the master clock reference time signal and a slave time signal generated at a time corresponding to receipt of the master clock reference time signal is calculated and added to an accumulator total.

At a decision block 512, it is determined if enough master clock reference time signals and slave time signals to form the desired basis set and comparison set, respectively, have been compared and their differences accumulated. If not, the routine 500 loops to the block 510 to read the next master clock reference time signal and add to the cumulative error stored in the accumulator. If enough master clock reference time signals and slave time signals to form the desired basis set and comparison set, respectively, have been compared and their differences accumulated, at a block 514 a mean error is computed and applied to adjust the slave clock.

At a block 516, a next master clock reference signal is received and counted but substantively ignored. At a decision block 518, it is determined whether enough master clock reference time signals have been ignored so as to warrant another synchronization process. If so, the routine 500 loops to the block 508 to zero the accumulator and continue with the synchronization process previously described. If not enough master clock reference time signals have been ignored, the routine 500 loops to the block 516 to continue receiving, counting, and substantively ignoring the content of the signals. It will be appreciated that the waiting process manifested in blocks 516 and 518 could also be performed by a timer rather than by counting a number of reference signals.

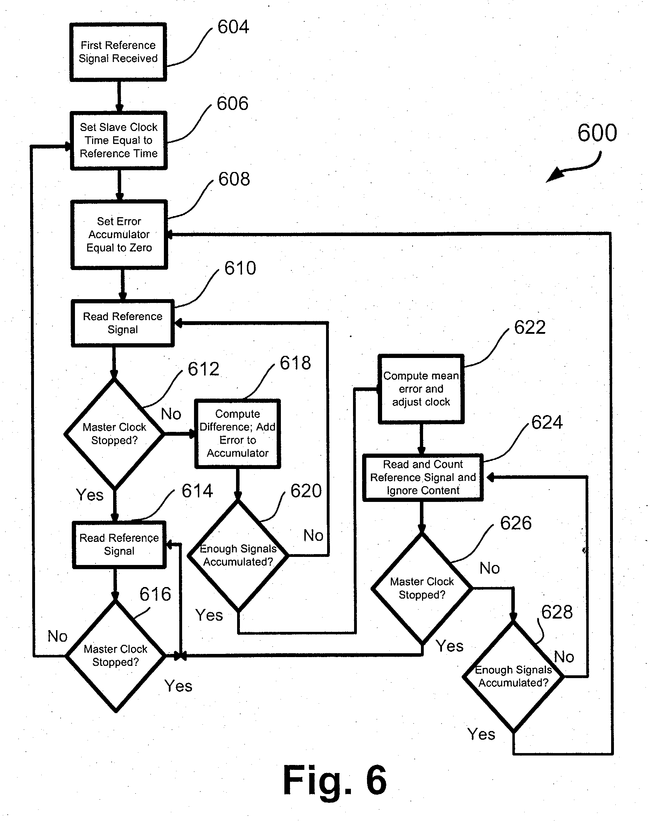

Referring now to FIGURE 6, a second embodiment of the present invention accounts for situations in which, at a broadcast site, it is desired to stop the running of the slave clocks at remote locations. For example, if in the midst of a game show broadcast a news bulletin is issued, the broadcaster may wish to pause the game. The broadcaster may appropriately desire that slave clocks be stopped so that when the game show broadcast resumes, users also can resume their interaction with the game with appropriate synchronization. The broadcaster can stop the slave clocks by transmitting a stop indicator such as a status flag or status bit associated with the master clock reference time signals. Suitably equipped STBs or other receivers receiving the stop indicator cease execution of the slave clock. When the stop indicator is reset, cleared, or otherwise rescinded, the slave clock is resynchronized with the master clock, and a continuing resynchronization process resumes.

FIGURE 6 shows a flowchart of a routine 600 for synchronizing a slave clock according to a second embodiment of the present invention incorporating the previously described stop indicator. At a block 604 a first reference time signal from the master clock is received. At a block 606, the slave clock time is synchronized to the master clock time contained in the first reference signal. At a block 608, an error accumulator, which is used to accumulate total error between master clock reference time signals in the basis set and the slave clock time signals in comparison set, is set to zero. At a block 610, a master clock reference time signal is read and an error representing a difference between the master clock reference time signal and a slave time signal generated at a time corresponding to receipt of the master clock reference time signal is calculated and added to an accumulator total.

At a decision block 612, it is determined whether a stop indicator is received indicating the master clock is paused. If so, at a block 614 a master clock reference time signal is read and at a decision block 616 it is determined if the stop indicator has been rescinded indicating if the master clock is still paused. If the master clock is no longer paused as indicated by rescinding of the stop indicator, the routine 600 loops to the block 606 to resynchronize the slave clock. If the master clock is still paused, the routine 600 loops to the block 614 to read the next master clock reference time signal.

At the decision block 612, if it is determined that a stop indicator has not been received indicating the master clock is not paused, at a block 618 an error representing a difference between the master clock reference time signal and a slave time signal generated at a time corresponding to receipt of the master clock reference signal is calculated and added to an accumulator total. Operation of the error accumulator is equivalent to that described in connection with the routine 500 (FIGURE 5). At a decision block 620, it is determined if enough master clock reference time signals and slave time signals to form the desired basis set and comparison set, respectively, have been compared and their differences accumulated. If not, the routine 600 loops to the block 610 to read the next master clock reference time signal. If enough master clock reference time signals and slave time signals to form the desired basis set and comparison set, respectively, have been compared and their differences accumulated, at a block 622 a mean error is computed and applied to adjust the slave clock.

At a block 624, a next master clock reference signal is received and counted but substantively ignored. At a decision block 626, it is determined whether a stop indicator has been received indicating the master clock has been paused. If so, the routine 600 loops to the block 614 to read a next master clock reference time signal. If not, at a decision block 628, it is determined whether enough master clock reference time signals have been ignored so as to warrant another synchronization process. If so, the routine 600 loops to the block 608 to zero the accumulator and continue with the synchronization process previously described. If not enough master clock reference time signals have been ignored, the routine 600 loops to the block 624 to continue receiving, counting, and substantively ignoring the content of the signals. Again, it will be appreciated that the waiting process manifested in blocks 624 and 628 could also be performed by a timer rather than by counting a number of reference signals.

Further alternative embodiments allow other functionality. In one alternative embodiment, the slave clock can accumulate a series of values for the clock offset $E'_i$. This offset can be used to further smooth the variance of error between the master clock and the slave clock. In addition, adjustments could be applied to the slave clock incrementally over a period of time instead of all at once. For example, the average difference calculated between the basis set and the comparison set could be divided into a number of units and applied in increments of that same number.

In yet another alternative embodiment, the slave clock can accumulate a series of values for the clock adjustment $\bar{E}_i$, and estimate therefrom the rate difference between the slave and master clock. Once determined, this rate difference can be utilized to refine the clock adjustment. For example, if the slave clock operates more slowly than the master clock, an actual offset between the clocks at two consecutive signal times is given by

$$E'_{i+1} = E'_i + \gamma$$

An averaging procedure consistent with that previously described results in the computation:

$$
\begin{aligned}
\overline{E} &= \frac{1}{n}\sum_{i=1}^{n} E_i \\
&= \frac{1}{n}\sum_{i=1}^{n}\left(E'_1 + (i-1)\gamma + P + J_i\right) \\
&= (i-1)\gamma + \frac{1}{n}\sum_{i=1}^{n}\left(E'_1 + P + J_i\right) \\
&= (i-1)\gamma + E'_1 + P + \frac{1}{n}\sum_{i=1}^{n} J_i
\end{aligned}
$$

Using this computation, an estimation of $E'_1 + P$ can be corrected for the drift between the clocks.

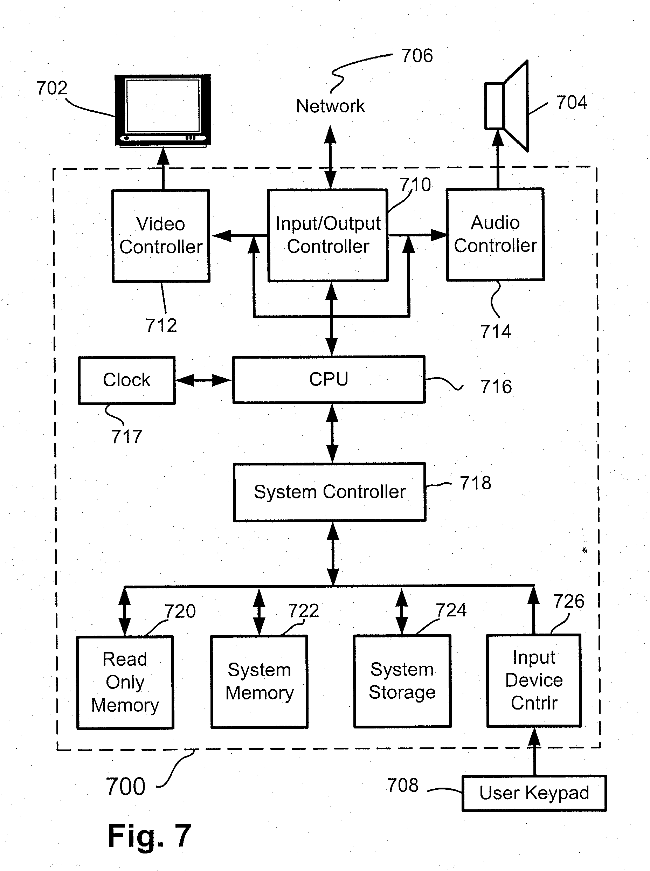

FIGURE 7 shows a computer system 700 operable for generating programs at a broadcast location or for executing programs using embodiments of the present invention. Particularly, the system 700 could be a STB or other receiver responsive to master clock time reference signals as previously described.

The computer system 700 is operable for controlling a display 702, such as a television, and an audio subsystem 704, such as a stereo or a loudspeaker system. The computer system 700 receives input from or sends output through a network 706, such as a broadband data network. The computer system 700 also receives or sends user input from a wired or wireless user keypad 708, which may be in the nature of a keyboard, STB remote, or other device.

The computer system 700 receives input from and sends output to the network 706 via an input/output controller 710, which directs signals to and from a video controller 712, an audio controller 714, and a central processing unit (CPU) 716. In the case of a STB, the input/output controller 710 suitably is a multiplexer for routing video data blocks received from the network 706 to a video controller 712 in the nature of a video decoder, audio data blocks to an audio controller 714 in the nature of an audio decoder, and for routing other data blocks to a CPU 716 for processing. In turn, the CPU 716 communicates through a system controller 718 with input and storage devices such as read only memory (ROM) 720, system memory 722, system storage 724, and input device controller 726.

The CPU is driven by a clock 717. In a receiver or STB, the clock 717 is a slave clock which can be synchronized with master clock reference time signals according to embodiments of the invention as previously described. For example, computer program code instructions could be stored in the system memory 722 and executed by the CPU 716 to apply corrections to the slave clock. Alternatively, in a system at a broadcast location, the clock 717 suitably is a master clock from which master clock reference time signals are transmitted over the network 706. It will be appreciated that the system 700 also can include devices or be programmed with instructions to respond to and generate stop indicators signaling when the master clock is paused.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

**Claims**

1. A method for synchronizing a slave time kept by a slave clock with reference time signals received from a master clock, the method comprising:

collecting a first basis set of reference time signals received from a master clock;

identifying a first comparison set of slave time signals from a slave clock, each of the slave time signals in the comparison set corresponding with each of reference time signals in the first basis set;

calculating a difference between each of the reference time signals in the first basis set and the slave time signals in the first comparison set;

calculating a first average difference between each of the reference time signals in the first basis set and the slave time signals in the first comparison set; and

adjusting a slave time kept by the slave clock by the first average difference.

2. The method of claim 1, further comprising initially setting the slave time to the reference time as specified by a first reference signal received from the master clock.

3. The method of claim 1 or 2, further comprising incrementally adjusting the slave time by the average difference.

4. The method of claim 3, further comprising incrementally adjusting the slave time by making a series of adjustments to the slave time, each of the series of adjustments applying a portion of the average difference to the slave time.

5. The method of any one of the preceding claims, further comprising repeating synchronizing the slave time with the reference time signals.

6. The method of claim 5, further comprising calculating a second average difference between each of a second basis set of reference time signals received from a master clock and each of a second comparison set of slave time signals from the slave clock.

7. The method of claim 6, further comprising adjusting the slave time by a second average difference.

8. The method of claim 7, further comprising calculating a cumulative average difference of the average difference and the second average difference and adjusting the slave time in proportion to the cumulative average difference.

9. The method of any one of the preceding claims, further comprising calculating a rate difference between the master clock and the slave clock and adjusting the slave time to account for the rate difference.

10. The method of any one of the preceding claims, further comprising waiting until after a predetermined number of the reference time signals have passed before collecting first basis set of reference time signals and identifying the first comparison set of slave time signals.

11. The method of any one of the preceding claims, further comprising waiting until after a predetermined interval of time has passed before collecting the first basis set of reference time signals and identifying the first comparison set of slave time signals.

12. The method of any one of the preceding claims, wherein the slave clock is associated with a local device clock and the master clock is a remote clock.

13. The method of claim 12, wherein the local device receives the reference time signals from the master clock from one of a wireless network or a wired network.

14. The method of claim 13, wherein the local device is a media broadcast receiver configured to receive media broadcasts and the network is a broadcast network.

15. The method of any one of the preceding claims, wherein the reference signals are configured to include a stop indicator and the slave clock is configured to suspend operation upon receiving the stop indicator.

16. The method of claim 15, wherein rescinding of the stop indicator causes the slave clock to reset the slave time to the reference time specified by a subsequent reference signal received from the master clock.

17. The method of claim 16, wherein the subsequent reference signal is one of a current reference signal rescinding the stop indicator or a subsequent reference signal received after the rescinding of the stop indicator.

**18.** A computer readable medium comprising computer program code means which, when executed by a computer, cause synchronization of a slave time kept by a slave clock with reference time signals received from a master clock in accordance with any one of claims 1 to 17.

**19.** A computer locally connected to a slave clock and having loaded thereon the computer program code means described in claim 18.

**20.** A system for synchronizing a slave time kept by a slave clock with reference time signals received from a master clock, the system comprising:

a slave clock configured to keep a slave time and respond to time adjustments;
a receiver configured to receive reference time signals from a master clock;
an accumulator configured to collect a first basis set of reference time signals received from the master clock; and
a processor including:

a first component configured to identify a first comparison set of slave time signals from the slave clock, each of the slave time signals in the comparison set corresponding with each of the reference time signals in the basis set;
a second component configured to calculate a difference between each of the reference time signals in the first basis set and the slave time signals in the first comparison set;
a third component configured to calculate an average difference between each of the reference time signals in the first basis set and the slave time signals in the first comparison set; and
a fourth component configured to adjust the slave time kept by the slave clock by the first average difference.

**21.** The system of claim 20, wherein the processor is configured to initially set the slave time to the reference time as specified by a first reference signal received from the master clock.

**22.** The system of claim 20 or 21, wherein the processor is configured to adjust the slave time by the average difference.

**23.** The system of claim 22, wherein the processor is configured to incrementally adjust the slave time by making a series of adjustments to the slave time, each of the series of adjustments applying a portion of the average difference to the slave time.

**24.** The system of claim 20, 21, 22 or 23, wherein the processor is configured to repeatedly synchronize the slave time with the reference time signals.

**25.** The system of claim 24, wherein the processor includes a fifth component configured to calculate a second average difference between each of a second basis set of reference time signals received from a master clock and each of a second comparison set of slave time signals from the slave clock.

**26.** The system of claim 25, wherein the processor includes a sixth component configured to adjust the slave time by a second average difference

**27.** The system of claim 26, wherein the processor includes a seventh component configured to calculate a cumulative average difference of the average difference and the second average difference and adjust the slave time in proportion to the cumulative average difference.

**28.** The system of any one of claims 20 to 27, wherein the processor includes an eighth component configured to calculate a rate difference between the master clock and the slave clock and adjust the slave time to account for the rate difference.

**29.** The system of any one of claims 20 to 28, wherein the processor includes a ninth component configured to wait until after a predetermined number of the reference time signals have passed before collecting the first basis set of reference time signals and identifying the first comparison set of slave time signals.

**30.** The system of any one of claims 20 to 29, wherein the processor includes a tenth component configured to wait until after a predetermined interval of time has passed before collecting the first basis set of reference time signals and identifying the first comparison set of slave time signals.

**31.** The system of any one of claims 20 to 30, wherein the slave clock is associated with a local device clock and the master clock is a remote clock.

**32.** The system of claim 31, wherein the local device receives the reference time signals from the master clock from one of a wireless network or a wired network.

**33.** The system of claim 32, wherein the local device is a media broadcast receiver configured to receive media broadcasts and the network is a broadcast network.

**34.** The system of any one of claims 20 to 33, wherein the reference signals are configured to include a stop indicator and the slave clock is configured to suspend operation upon receiving the stop indicator.

**35.** The system of claim 34, wherein the processor includes an eleventh component configured to respond to rescinding of the stop indicator and cause the slave clock to reset the slave time to the reference time specified by a subsequent reference signal received from the master clock.

**36.** The system of claim 35, wherein the subsequent reference signal is one of a current reference signal rescinding the stop indicator or a subsequent reference signal received after the rescinding of the stop indicator.

102

100

106

1000
01:19

4375
07:23

8123
13:01

15991
25:10

104

**Fig. 1A**
**(Prior Art)**

120

122

124

**Fig. 1B**
**(Prior Art)**

**Fig. 2
(Prior Art)**

**Fig. 3
(Prior Art)**

**Fig. 4
(Prior Art)**

First Reference
Signal Received — 504

Set Slave Clock
Time Equal to
Reference Time — 506

500

Set Error
Accumulator to
Zero — 508

Compute Mean
Error and Adjust
Clock — 514

Read Reference
Signal, Compute
Difference and Add
to Accumulator — 510

Read and Count
Reference Signal
and Ignore Content — 516

Enough
Reference Signals
Accumulated? — 512

No

Yes

Enough
Reference Signals
Skipped? — 518

No

Yes

## Fig. 5

**Fig. 6**

**Fig. 7**